# EUROPEAN PATENT APPLICATION

(11) **EP 4 711 972 A1**
(43) Date of publication of application: **18.03.2026**
(21) Application number: 25181617.9
(22) Date of filing: 09.06.2025
(51) Int. Cl.: G06F 40/279, G06F 40/30

(54) **USER INTERFACE FOR COMMUNICATION SESSIONS**

(30) Priority: 11.09.2024 US 202418882582
(71) Applicant: FUJITSU LIMITED, Kawasaki-shi, Kanagawa 211-8588 (JP)
(72) Inventor: SONG, Yifan, Sunnyvale, 94085 (US); AU, Wing Yee, Sunnyvale, 94085 (US); WONG, Hon Yung, Sunnyvale, 94085 (US)
(74) Representative: Haseltine Lake Kempner LLP

(57) **Abstract**

According to an aspect of at least one embodiment, a method to improve a user interface may include obtaining transcript data include one or more words from a transcription of speech in the audio data. The transcript data may be generated by automated speech recognition technology from the audio data. The transcript data and criteria may be provided to a large language model configured to analyze the transcript data based on the criteria to select a word from the transcript data. A definition of the selected word may also be generated by the large language model. The selected word and the definition of the selected word may be obtained. The audio data may be broadcasted by a device and the selected word and the definition of the selected word may be presented on a display of the device with the broadcasting of the audio data.

## Description

### FIELD

The present disclosure generally relates to a user interface for communication sessions.

### BACKGROUND

Discussions often span a variety of subjects and participants often have differing backgrounds and experiences in the subject matter being discussed. Because of the diversity in knowledge that each participant has, it may be the case that participants encounter words during the discussion which are unfamiliar to them. An unfamiliar word may create a communication barrier between discussion participants who understand the word and those who do not. Furthermore, searching for an explanation of the word during the conversation may be distracting and may cause a lack of attention to the discussion.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of at least one embodiment, one or more operations may include obtaining transcript data. The transcript data may be generated from audio data that includes speech by an automated speech recognition technology. The transcript data may include one or more words from a transcription of the speech in the audio data. The transcript data and a first set of criteria may be provided to a large language model. The large language model may be configured to analyze the transcript data based on the first set of criteria to select a word from the transcript data. A definition of the selected word may be generated by the large language model. The selected word and the definition of the selected word may be obtained. The audio data may be broadcasted by a device. The selected word, the definition of the selected word, and the broadcasted audio data may be presented on a display of the device.

The object and advantages of the embodiments will be realized and achieved at least by the elements, features, and combinations particularly pointed out in the claims. It is to be understood that both the foregoing general description and the following detailed description are explanatory and are not restrictive of the invention, as claimed.

### BRIEF DESCRIPTION OF THE DRAWINGS

Example embodiments will be described and explained with additional specificity and detail through the accompanying drawings in which:
FIG. 1 illustrates an example environment 100 that includes a user interface for communication sessions;
FIG. 2 illustrates an operational workflow for user interface presentation;
FIG. 3 illustrates an example user device for user interface presentation;
FIG. 4 is a flowchart of a method of user interface presentation;
FIG 5 is a flowchart of a method of user interface presentation; and
FIG. 6 illustrates an example computing system in accordance with one or more embodiments of the present disclosure.

### DETAILED DESCRIPTION

In work environments, academic environments, and other environments, individuals and organizations are often separated according to technical fields, areas of study, roles, or functions that the individuals and organizations perform. Each individual and organization may have varying levels of expertise, experience, or familiarity with the language utilized in other fields or organizations or even within their own field. As a result, the language utilized by individuals and/or organizations may relate to specific subject matter and may not be readily understood by others not familiar with the subject matter. For example, individuals and/or organizations may use words that are highly technical, jargon, or simply unknown to others.

In some instances, the lack of comprehension of words or terms utilized by other individuals and/or organizations may create barriers to communication between individuals communicating using devices. For example, individuals may interact with a user interface to participate in a cross-functional, virtual meeting on a teleconferencing platform like Skype, Zoom, or Microsoft Teams using a device. In the meeting, an individual may not understand a word that another individual uses, and the use of the word may leave the individual with a gap in comprehension and unable to effectively communicate with the other individual.

This confusion may not be remedied without distracting the individual from the discussion because, the user interface does not contextualize or define the word. Users must leave the user interface to find the definition of the word or additional context. Furthermore, user interfaces do not provide a mechanism for providing additional context to the words utilized beyond the words spoken by the other participant in the conversation. Thus, users of devices are left to self-help remedies to attempt to understand the word while the discussion is ongoing.

In some circumstances, individuals may try to remedy their lack of comprehension during the discussion by minimizing the user interface, opening a web browser, and searching for the word. However, minimizing the user interface diverts the attention of the individual from the ongoing discussion, and, as a result, the individual may miss the context in which the word is used or any other topics being discussed at the meeting while the individual focuses on searching for the word in the web browser. Furthermore, searching for terms dynamically may be more difficult as the number of unfamiliar words increases. Thus, in a setting where the individual does not understand multiple words that are used, the individual may not be able to keep up with searching the words as the words are used in the discussion, and the individual may be increasingly distracted from the discussion.

In other circumstances, individuals may attempt to gain an understanding of the word by determining the context in which the word is used in the discussion. Utilizing context may be less distracting than searching for the word during the discussion, but the individual may be unsuccessful in understanding the word based on the context, especially if the individual does not understand other words utilized in the discussion.

According to one or more embodiments of the present disclosure, words spoken in a communication session that an individual may not understand may be selected, defined, and presented via a user interface on a device of the individual as the words are encountered during the communication session. Selecting, defining, and presenting the words in the user interface as the words are encountered may allow the individual to remain focused on the user interface and the discussion while increasing the individual's comprehension of the subject matter being discussed. Alternately or additionally, selecting, defining, and presenting words in a user interface that the individual may not understand as the individual encounters the word improves the user interface and may reduce the amount of distraction that an individual would otherwise have if the individual searched for terms dynamically.

In some embodiments, to select, define, and present words on a device during a communication session, transcript data may be generated from audio data of the communication session that includes speech. The transcript data may be obtained via automated speech recognition (ASR) technology and include a transcription of the speech in the audio data.

In some embodiments, the transcript data and a first set of criteria may be provided to an artificial intelligence system, such as a large language model. The large language model may be configured to analyze the transcript data based on the first set of criteria to select words from the transcript data that are highly technical, jargon, acronyms, or other words that may be complex and/or not readily understood by most people. The large language model may also generate definitions of the selected words. Because the large language model includes the context of the communication session, the definitions may be specific to the usage of the selected words in the communication session.

In some embodiments, the audio data of the communication session may be broadcasted by a device to a user that is participating in the communication. In these and other embodiments, in substantially real-time with the broadcasting of the audio data, the selected words and the associated definitions may be presented to the user via a user interface on a display of the device.

In some embodiments, the large language model may be provided another set of criteria regarding the user. In these and other embodiments, the large language model may cull the words with definitions for presenting based on another set of criteria. In these and other embodiments, the other set of criteria may include an attribute of a user of the device. For example, the attribute of the user may include a technical field in which the user is employed, a business organization associated with the user, an education level of the user, a job role of the user, and a number of years of working experience of the user. By using attributes of the user, the words with definitions that are presented may be more likely to be words that the user does not know. For example, a definition of the medical term "osteoporosis" may be presented to an engineer but not a medical professional.

Embodiments of the present disclosure are explained with reference to the accompanying figures.

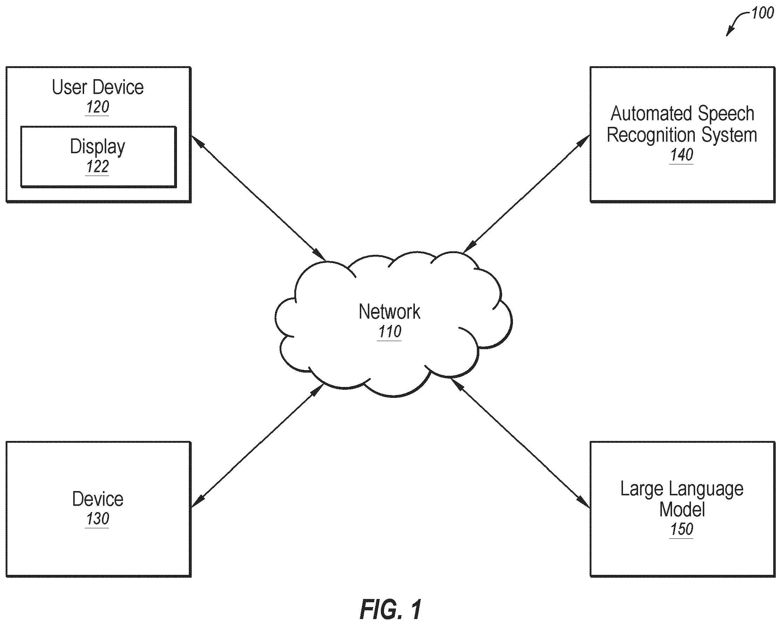

FIG. 1 illustrates an example environment 100 that includes a user interface for communication sessions in accordance with one or more embodiments of the present disclosure. In some embodiments, the environment 100 may include a network 110, a user device 120, a device 130, an automated speech recognition system 140, and a large language model 150.

In some embodiments, the network 110 may be configured to communicatively couple the user device 120, the device 130, the automated speech recognition system 140, and the large language model 150. In some embodiments, the network 110 may be any wired or wireless network, or combination of multiple networks, configured to send and receive communications between systems and devices. In some embodiments, the network 110 may include a Personal Area Network (PAN), a Local Area Network (LAN), a Metropolitan Area Network (MAN), a Wide Area Network (WAN), a Storage Area Network (SAN), a cellular network, the Internet, an optical network, or some combination thereof.

In some embodiments, the user device 120 may be any computer system capable of communicating over the network 110 and capable of participating in communication sessions. For example, the user device 120 may be a desktop computer, a laptop computer, a smartphone, a mobile phone, a tablet computer, or any other computing device that may be used for communication between devices over a network.

The user device 120 may include a display 122 on which a user interface may be presented. As provided in more detail hereafter, the environment 100 may be configured to provide information for presentation on the user interface presented on the display. For example, the user interface may be configured to provide information regarding a communication session in which the user device 120 is participating. In these and other embodiments, the user device 120 may be configured to present words and definitions of words that are used during the communication session in the user interface.

In some embodiments, the device 130 may be any computer system capable of communicating over the network 110 and capable of participating in communication sessions. For example, the device 130 may be a desktop computer, a laptop computer, a smartphone, a mobile phone, a tablet computer, or any other computing device that may be used for communication between devices over a network. The device 130 may also include a display similar to display 122. As provided in more detail hereafter, the user device 120 may be perform one or more steps for presenting words and definitions of words in audio data.

In some embodiments, each of the user device 120 and the device 130 may include memory and at least one processor, which are configured to perform operations as described in this disclosure, among other operations. In some embodiments, each of the user device 120 and the device 130 may include computer-readable instructions that are configured to be executed by each of the user device 120 and the device 130, respectively, to perform operations described in this disclosure.

In some embodiments, each of the user device 120 and the device 130 may be configured to establish communication sessions with other devices. For example, each of the user device 120 and the device 130 may be configured to establish an outgoing communication session, such as a telephone call, video call, video conference, or other communication session, with another device over a network, such as a portion of the network 110.

In some embodiments, the automated speech recognition system 140 may be any system capable of communicating over the network 110 and converting audio data into transcript data. The automated speech recognition system 140 may include any configuration of hardware, such as processors, servers, and storage servers that are networked together and configured to perform audio transcription. For example, the automated speech recognition system 140 may include one or multiple computing systems, such as multiple servers that each include memory and at least one processor. The automated speech recognition system 140 may be configured to generate transcriptions from audio using automated speech recognition technology. In these and other embodiments, the automated speech recognition system 140 may include speech engines that are trained to recognize speech in audio and generate a written transcription of the speech.

As used in this disclosure, the term audio may be used generically to refer to sounds that may include spoken words. Furthermore, the term "audio" may be used generically to include audio in any format, such as a digital format, an analog format, or a propagating wave format. Furthermore, in the digital format, the audio may be compressed using different types of compression schemes.

In some embodiments, the large language model 150 may be an artificial intelligence system such as an artificial neural network. For example, the large language model 150 may be built using a decoder-only transformer-based architecture. In these and other embodiments, the large language model 150 may be configured to be a prompt based large language model 150 and may operate by taking input text and one or more prompts and repeatedly predicting the next token or word based on the input text. In these and other embodiments, the large language model 150 may obtain knowledge about language syntax, semantics, and ontology from a corpus used in training the large language model 150. For example, the large language model 150 may be part of a large language model 150 system, such as a OpenAI's GPT series of models, Microsoft Copilot, Google's PaLM GeminI, Meta's lLaMA family of open-source models, Anthropic's Claude models, and Mistral A''s open source models, among other LLM systems. Alternately or additionally, the above large language model 150 systems may be examples of the large language model 150 implemented in the environment 100.

In some embodiments, the user device 120 may be in a communication session with the device 130. Audio data including speech may be generated during the communication session between the user device 120 and the device 130. For example, the device 130 may obtain audio data from a microphone of the device 130 and send the audio data to the user device 120. The user device 120 may be configured to broadcast the audio data for a user of the user device 120 to hear.

In some embodiments, the audio data generated during the communication session may be provided by the user device 120 to the automated speech recognition system 140. For example, in some embodiments, the audio data received by the user device 120 may be provided to the automated speech recognition system 140.

The automated speech recognition system 140 may be configured to receive the audio data. After receiving the audio data, the automated speech recognition system 140 may generate transcript data. The transcript data may include one or more words of a transcription of the speech in audio data. After the automated speech recognition system 140 generates the transcript data, the automated speech recognition system 140 may direct the transcript data to the user device 120.

After the transcript data has been obtained by the user device 120, the transcript data may be provided to the large language model 150. The user device 120 may be further configured to provide instructions to the large language model 150 to analyze the transcript data in order to select one or more words from the transcript data that are technical, unique to a specific field, jargon, acronyms, or other complex words that may not be readily understood or may be unfamiliar to a majority of people. The words selected by the large language model 150 may be referred to in this disclosure as unfamiliar words. For example, the transcript data may be analyzed to determine any word that is not within the most commonly used 3,000 words or some other number of words. Alternately or additionally, the transcript data may be analyzed to determine any word that is not the average vocabulary of a native speaker. Alternately or additionally, the transcript data may be analyzed using the neural network of the large language model 150 to select words that may be considered as unfamiliar words based on the training of the large language model 150. For example, the large language model 150 may identify the term "osteoporosis" as being a technical term, and the term "osteoporosis" may be selected by the large language model 150.

In some embodiments, the user device 120 may provide a set of criteria via one or more prompts to the large language model 150. The set of criteria may direct the large language model 150 how to analyze the transcript data to select the one or more words.

In some embodiments, the user device 120 may be further configured to provide instructions to the large language model 150 to generate definitions for the selected one or more words. In these and other embodiments, the user device 120 may provide another set of criteria via one or more prompts to the large language model 150 to instruct the large language model 150 to generate the definitions. In these and other embodiments, the large language model 150 may provide the selected one or more words and the definitions to the user device 120.

In some embodiments, the user device 120 may obtain the selected one or more words and the definitions. In these and other embodiments, the user device 120 may be further configured to direct the large language model 150 to cull the selected one or more words based on attributes of a user of the user device 120. For example, the user device 120 may be further configured to provide instructions to the large language model 150 to cull the selected one or more words. In these and other embodiments, the user device 120 may provide another set of criteria via one or more prompts to the large language model 150 to instruct the large language model 150 to cull the selected one or more words. In these and other embodiments, the large language model 150 may provide an indication that the selected one or more words may be unfamiliar to the user of the user device 120. The user device 120 may be configured to present the selected one or more words that are indicated by the large language model 150. For example, the large language model 150 may identify the term "osteoporosis" as being a technical term. However, the large language model 150 may also be provided an attribute that the user of the user device 120 may have a medical background or work in a medical field. As a result, the large language model 150 may determine that the term "osteoporosis" may not be unfamiliar to the user given the specific characteristics of the user even though the term may be unfamiliar to the general public.

Alternately or additionally, the user device 120 may be further configured to provide instructions to the large language model 150 to select the one or more words based on attributes of a user of the user device 120. For example, in some embodiments the large language model 150 may select the one or more words and then cull the selected one or more words before providing the one or more words to the user device 120. Alternately or additionally, the large language model 150 may select the one or more words using attributes about the user of the user device 120. As a result, the words obtained by the user device 120 may be words that are more likely to be unfamiliar to the user.

The user device 120 may obtain the selected one or more words and the definition of the selected one or more words from the large language model 150. While the audio data is broadcasted, the selected one or more words and the definition of the selected one or more words may be presented on the display 122 of the user device 120 via a user interface.

In some embodiments, the selected word and the definition of the selected word may be presented via the user interface in real-time during the communication session between the user device 120 and the device 130 in association with broadcasting a portion of the audio data that includes the selected word. For example, the audio data may include speech that includes the selected word, and the selected word and the definition of the selected word may be presented on the display 122 of the user device 120 in real-time directly after a portion of the audio data is being broadcast. For example, as the audio data is provided to the user device 120 for broadcasting, the transcript data may be generated, and provided to the large language model 150 selection of words and generation of definitions. As such, there may be small lag between when a word is spoken and when a definition is presented, however, the lag may be due to processing by the automated speech recognition system 140 and the large language model 150.

As described in this disclosure, the environment 100 may operate to present via a user interface of a device a continuous flow of definitions of unfamiliar words in the audio data as the audio data is generated during a communication session and is broadcast by the device. As such, the environment 100 may present via a user interface real-time definitions of words from audio data that is part of a communication session. Previously, user interfaces were unable to provide definitions in real-time of communication sessions, such as unscripted communication sessions. The systems and methods described in this disclosure provide a technical solution to user interfaces being unable to provide additional information to users of the user interfaces.

Modifications, additions, or omissions may be made to the environment 100 without departing from the scope of the present disclosure. For example, in some embodiments, the environment 100 may not include the automated speech recognition system 140. In these and other embodiments, the user device 120 may include automated speech recognition technology to allow the user device 120 to carry out functions previously performed by the automated speech recognition system 140. For example, the user device 120 may separately obtain audio data that includes speech and generate the transcript data from the audio. The automated speech recognition system 140 may similarly be included in the device 130 and shared between the devices.

In another example, in some embodiments, the environment 100 may not include the large language model 150. In these and other embodiments, the user device 120 may include artificial intelligence technology to allow the user device to carry out functions previously performed by the large language model 150. For example, the user device 120 may separately obtain the transcript data generated from the audio data, analyze the transcript data to select one or more words from the transcript data, generate a definition of the selected one or more words, and/or present the selected one or more words and the definition of the selected one or more words based on the indication. The large language model 150 may similarly be included in the device 130, and the device 130 may separately perform any of the steps provided above before sending the selected one or more words and the definition of the one or more words to the user device 120 for presentation.

In some embodiments, the user device 120 may perform each of the operations described. In some embodiments, a separate device like the device 130 may perform the operations described above. In these and other embodiments, the separate device like the device 130 may send the selected word and the definition of the selected word to the user device 120 for presentation on the display 122.

In some embodiments, the transcript data may be obtained and/or provided to the large language model 150 by the device 130. Additionally or alternatively, the device 130 may provide instructions to the large language model 150 regarding how to analyze the transcript data.

In some embodiments, the processes performed by the user device 120 may also be performed by the device 130 during the communication session. For example, the device 130 may obtain transcript data of audio data obtained from the user device 120, direct the automated speech recognition system 140 to generate transcript data, and provide the transcript data to the large language model 150 for processing. As a result, the device 130 may be configured to present via a user interface one or more words and definitions that are applicable to a user of the device 130. Note that the words presented by the device 130 may be different than the words presented by the user device 120. For example, the user of the user device 120 may have different attributes than the user of the device 130. For example, the user of the user device 120 may be a teacher and a user of the device 130 may be a student. As such, definitions of technical terms may be presented to the student via a user interface of the device 130 and definitions of slang used by student may presented to the teacher via a user interface of the user device 120.

In some embodiments, each of the user device 120 and the device 130 may perform the operations described above. As such, each of the user device 120 and the device 130 may perform similar operations. Alternately or additionally, a separate device or system may be configured to obtain the audio data of the communication and perform the operations to obtain one or more words and definitions for each of the user device 120 and the device 130. In these and other embodiments, the separate device or system may provide the corresponding one or more words and definitions to each of the user device 120 and the device 130 for presentation via a user interface by each of the user device 120 and the device 130. For example, the separate device or system may be a system or device that is assisting in hosting or providing infrastructure for the communication session. Alternately or additionally, the separate device or system may perform one or more of the operations described above. For example, the separate device or system may obtain the transcript data and provide the transcript data to the user device 120 and the device 130. Alternately or additionally, the separate device or system may obtain the transcript data, the selected one or more words, and/or definitions of the one or more words. In these and other embodiments, the separate device or system may provide the one or more words to the user device 120 and the device 130. In these and other embodiments, the user device 120 and the device 130 may cull the provided one or more words based on attributes of the user before presenting the one or more words and definitions via a user interface.

In some embodiments, definitions of words used in speech from the audio data may be obtained by the user device 120 where the audio is obtained by the user device 120 from the device 130. As such, definition of words spoken by a user of the user device 120 during the communication session may not be presented back to the user. Alternately or additionally, definitions of words from all audio data of the communication session regardless of the origination of the audio data may be used to generate definitions for the user device 120. Alternately or additionally, a user may select to have the definitions for all audio, for all audio not originating from the user device, or only audio originating from some devices of the communication session to be used to determine definitions for presentation.

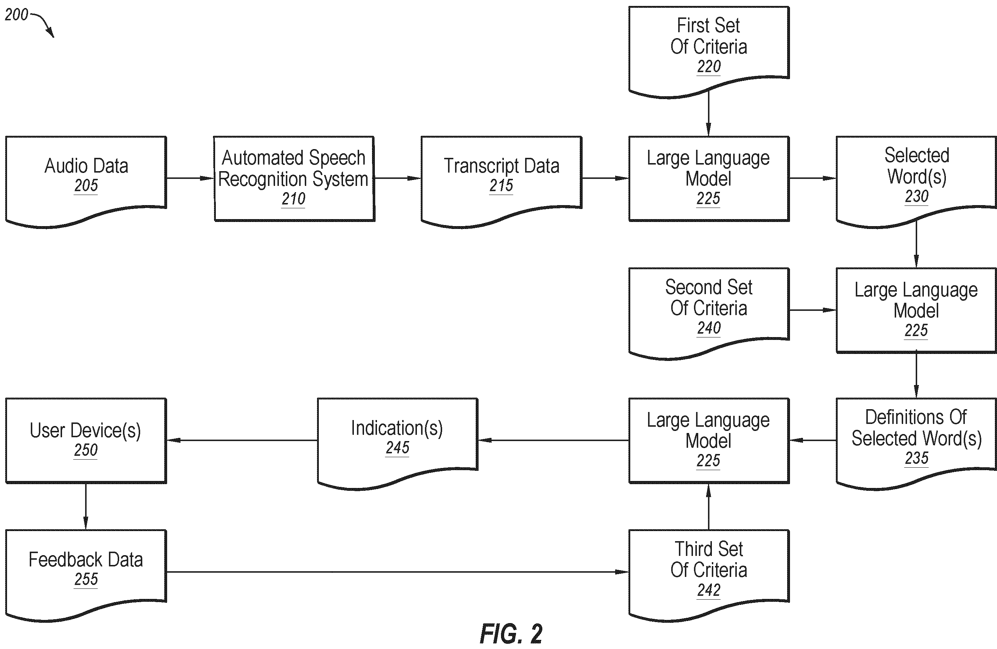

FIG. 2 illustrates an example operational workflow 200 for user interface presentation. The operational workflow 200 may include an automated speech recognition system 210, a large language model 225, and a user device 250. The automated speech recognition system 210 may be similar to the automated speech recognition system 140 described with reference to FIG. 1. The large language model 225 may be similar to the large language model 150 described with reference to FIG. 1. The user device 250 may be similar to the user device 120 described with reference to FIG. 1.

In the operational workflow 200, audio data 205 may be provided to the automated speech recognition system 210. The audio data may be obtained from a communication session including the user device 250, and the audio data 205 may include speech from the communication session. The audio data 205 may be provided by the user device 250 or some other device.

The automated speech recognition system 210 may generate transcript data 215 from the audio data. The transcript data 215 may include one or more words of a transcription of the speech in the audio data 205. The transcript data 215 may be provided from the automated speech recognition system 210 to the large language model 225. For example, in some embodiments, the automated speech recognition system 210 may provide the transcript data 215 to the user device 250 and the user device 250 may direct the transcript data 215 to the large language model 225. Alternately or additionally, another device may direct the transcript data 215 to the large language model 225.

In some embodiments, a first set of criteria 220 may be provided to the large language model 225. The large language model 225 may be configured to analyze the transcript data 215 based on the first set of criteria 220 to select one or more words from the transcript data 215 that may be unfamiliar. In some embodiments, the large language model 225 may perform the analysis of the transcript data 215 word-by-word, phrase-by-phrase, and/or sentence-by-sentence to allow the large language model 225 to select one or more words from the transcript data 215 and/or perform any of the subsequent operations in real-time as the large language model 225 receives the transcript data 215. In some embodiments, the first set of criteria 220 may be provided to the large language model 225 by the user device 250. The first set of criteria 220 may provide criteria to direct the large language model 225 how to select the unfamiliar words from the transcript data as the selected words 230. For example, the first set of criteria 220 may include a definition of the input, the desired output, the format of the output, and further limitations regarding the output.

In some embodiments, the first set of criteria 220 may be provided to the large language model 225 in one or more prompts. In these and other embodiments, the one or more prompts may be structured using a chain of thoughts technique where the prompts break down a main goal into intermediate tasks for the large language model 225 and/or the prompts may be structured using a meta prompting technique where the prompt breaks down tasks into subtasks. An example of the prompts that may be provided to the large language model 225 are as follows: "The job is to select word(s) that the audience may be unfamiliar with. The input will be a transcript of speech, one sentence after another. For each sentence, the task is to select word(s) that the audience might not fully understand. The output should be in the format of a list of word(s): [{word1}, {word2}]. Please leave the list blank if all the word(s) in the input phrase are common words that do not need additional explanations. Word(s) that have already been identified in previous input phrases do not need to be output."

In these and other embodiments, the first set of criteria 220 may include one or more characteristics regarding the communication session. The characteristics may assist the large language model 225 to select the unfamiliar words. For example, some characteristics of the communication session may include if the communication session is a virtual meeting and if so, information about the meeting such as the meeting size, meeting type, company information of participants in the meeting, an organization responsible for the meeting, organizations participating in the meeting, an individual responsible for the meeting, individuals participating in the meeting, and/or the subject matter of the meeting. For example, the first set of criteria 220 may indicate that the company holding the meeting is a hospital and the organization participants include the legal department, the human resources department, and the oncology department. This information may be used by the large language model 225 to determine the words that may be unfamiliar to this group of people.

The large language model 225 may analyze the transcript data 215 based on the first set of criteria 220 to select the unfamiliar words 230 from the transcript data 215.

A second set of criteria 240 may be provided to the large language model 225.The large language model 225 may be directed to output a definition 235 of the selected words 230 based on the second set of criteria 240. The second set of criteria 240 may provide criteria to direct the large language model 225 how to generate definitions of the selected words 230 that are unfamiliar. For example, the second set of criteria 240 may include a definition of the input, the desired output, the format of the output, and further limitations regarding the output.

In some embodiments, the selected words 230 may be obtained by the user device 250 from the large language model 225 and then provided back to the large language model 225 along with the second set of criteria 240.

In some embodiments, the second set of criteria 240 may be provided to the large language model 225 in one or more prompts. In these and other embodiments, the prompts may be structured in a similar or different manner than the previous prompts. An example of the prompts that may be provided to the large language model 225 are as follows "The job is to define the selected word(s). The input is the selected word(s) of the speech, one word after another. For each sentence, the task is to provide a definition for each selected word. The output should be in the format of a list of word-definition pairs: [{word1: definition 1 }, {word2: definition2}]. A word-definition pair should not be output if it has already been identified in previous input phrases, i.e., each word-definition pair should appear only once."

In these and other embodiments, the second set of criteria 240 may also include characteristics regarding the communication session similar to the first set of criteria 220. In some embodiments, the large language model 225 may provide definitions of the selected words 230 that may be appropriate for the context of the communication session. For example, the large language model 225 may obtain the transcript data and understand the context of the transcript data. As a result, the large language model 225 may be able to provide a definition that is better suited for the context in which the selected words 230 are used.

In some embodiments, the first set of criteria 220 and the second set of criteria 240 may be provided as one prompt. For example, the following prompts may be provided to the large language model 225: "The job is to select and define word(s) that the audience may be unfamiliar with. The input will be transcript of the speech, one sentence after another. For each sentence, the task is to first select any of those word(s) that the audience might not fully understand, then provide a definition for each of the word(s). The output should be in the format of a list of word-definition pairs: [{word1: definition1}, {word2: definition2}]. A word-definition pair should not be output if it has already been identified in previous input phrases, i.e., each word-definition pair should appear only once."

Based on the second set of criteria 240, the large language model 225 may output the definitions 235 of the selected words 230. In these and other embodiments, the large language model 225 may direct the definition 235 of the selected words 230 to the user device 250. As a result, the user device 250 may include the selected words 230 and the definitions 235.

In some embodiments, a third set of criteria 242 may be provided to the large language model 225 by the user device 250 to cull the selected words 230 and the definitions 235 to be presented by the user device 250. In these and other embodiments, the third set of criteria 242 may provide criteria to direct the large language model 225 how to cull the selected words 230 and the definitions 235. For example, the third set of criteria 242 may include a definition of the input, the desired output, the format of the output, and further limitations regarding the output.

In some embodiments, the user device 250 may provide the third set of criteria 242 and /or the selected words 230 and the definitions 235 to the large language model 225.

In these and other embodiments, the third set of criteria 242 may include one or more attributes of a user of the user device 250. For example, the one or more attributes of the user of the user device 250 may include a technical field in which the user is employed, a business organization associated with the user, an education level of the user, a job role of the user, and a number of years of working experience of the user.

In some embodiments, the third set of criteria 242 may be provided to the large language model 225 in one or more prompts. In these and other embodiments, the prompts may be structured in a similar or different manner than the previous prompts. An example of the prompts that may be provided to the large language model 225 are as follows: "The job is to reduce the number of word(s) in the list provided based on the audience already understanding some of these word(s) based on their background. The input will be a list of word-definition pairs in the format of {word1: definition 1 }, {word2: definition2}, one set after another. The audience's background is [...]. The task is to generate a new list that contains all the word(s) this audience may already understand in the format of "[Understood_word1, Understood_word2]", then generate a new word-definition list with the original format by removing the word-definition pairs in the understood word list." In these and other prompts, the prompts may be dynamically filed with the appropriate information.

Based on the third set of criteria 242, the large language model 225 may be directed to determine which of the selected words 230 and the definitions 235 may be presented on the user device 250. The large language model 225 may provide one or more indications 245 regarding which of the selected words 230 and the definition 235 are to be presented to the user device 250. For example, the indications 245 in some embodiments may be the large language model 225 providing the selected words 230 and the definitions 235 that are to be presented.

In some embodiments, the one or more indications 245 to present may be obtained by the user device 250. In these and other embodiments, the user device 250 may present the indicated selected words 230 and definitions 235 on a user interface of a display. The user device 250 may present the indicated selected words 230 and definitions 235 on the user interface of the display in real-time during the communication session in association with broadcasting a portion of the audio data 205 that includes the selected words 230.

The user interface of the user device 250 may also obtain feedback data 255 from the user of the user device 250 about the one or more presented words and definitions. In some embodiments, the feedback data may be negative data and/or positive feedback data based on negative and/or positive feedback provided by the user of the user device 250. In these and other embodiments, negative data may indicate that the user is familiar with a word that is presented. Alternately or additionally, positive data may indicate that the user is not familiar with the word that is presented.

In some embodiments, the user device 250 may update the third set of criteria 242 with the feedback data 255. An update of negative feedback data may include the third set of criteria 242 including words that are familiar to the user. As a result, when the third set of criteria 242 is provided to the large language model 225, the large language model 225 may determine not to present one or more of the selected words 230. For example, the user of the user device 250 may provide negative feedback about the word "osteoporosis" on the user interface. In these and other embodiments, the user device 250 may update the third set of criteria 242 with that negative feedback. As a result, when the word "osteoporosis" is selected by the large language model 225, the large language model 225 may determine not to have the user device 250 present the word "osteoporosis." Alternately or additionally, the large language model 225 may learn from the words familiar to the user and not select other words for presentation based on the user knowing the words for which the user providing negative feedback.

In some embodiments, an update of positive feedback data may include the third set of criteria 242 including words that are unfamiliar to the user. As a result, when the third set of criteria 242 is provided to the large language model 225, the large language model 225 may determine to present the selected words 230 and the definition 235. In some embodiments, the large language model 225 may determine to present words and definitions corresponding to the positive feedback data if the one or more words appear in the transcript data 215 regardless whether the large language model 225 selected the words. For example, the user of the user device 250 may provide positive feedback about the word "osteoporosis" on the user interface. In these and other embodiments, the user device 250 may update the third set of criteria 242 with the feedback data 255 and when the word "osteoporosis" appears in the transcript data 215, the large language model 225 may determine to present the word "osteoporosis" and the definition of "osteoporosis" even if "osteoporosis" has not been selected by the large language model 225.

Modifications, additions, or omissions may be made to operational workflow 200 without departing from the scope of the present disclosure. For example, in some embodiments, the operational workflow 200 may not include the automated speech recognition system 210. In these and other embodiments, the user device 250 may include automated speech recognition technology to allow the user device 250 to carry out functions previously performed by the automated speech recognition system 210. For example, the user device 250 may separately obtain the audio data 205 that includes speech and generate the transcript data 215 from the audio data 205. The automated speech recognition system 210 may similarly be included in a device separate from the user device 250.

In another example, in some embodiments, the operational workflow 200 may not include the large language model 225. In these and other embodiments, the user device 250 may include artificial intelligence technology to allow the user device to carry out functions previously performed by the large language model 225. For example, the user device 250 may separately obtain the transcript data 215 generated from the audio data 205, analyze the transcript data 215 based on the first set of criteria 220 to select words 230 from the transcript data 215, generate the definition 235 of the selected words 230, output the definition 235 of the selected words 230 based on the second set of criteria 240, determine whether to present the selected words 230 and the definitions 235 on the user device 250 based on the third set of criteria 242, provide the one or more indications 245 to the user device 250, and/or present the selected words and the definitions based on the indication. The large language model 225 may similarly be included in a device separate from the user device 250, and the separate device may separately perform any of the steps provided above.

In some embodiments, the data from the first set of criteria 220, the second set of criteria 240, and/or the third set of criteria may be provided prompts in a single interaction with the large language model 225. For example, the following prompts may be provided to the large language model 225: "The job is to select and define word(s) that the audience may be unfamiliar with. The input will be transcript of the speech, one sentence after another. For each sentence, the task is to first select any of those word(s) that the audience might not fully understand, then provide a definition for each of the word(s), then reduce the number of word-definition pairs in the list based on the audience already understanding some of these word(s) based on their background. The audience's background is [...]. The output should be in the format of a list of word-definition pairs: [{word1: definition1}, {word2: definition2}]. A word-definition pair should not be output if it has already been identified in previous input phrases, i.e., each word-definition pair should appear only once."

Alternately or additionally, the first set of criteria 220 or the second set of criteria 240 may include one or more attributes of a user of the user device 250 and/or other participants in the communication session. As a result, the large language model 225 may not select the words that may be familiar to the user or other users and/or generate definitions for words that may be familiar to the user or other users.

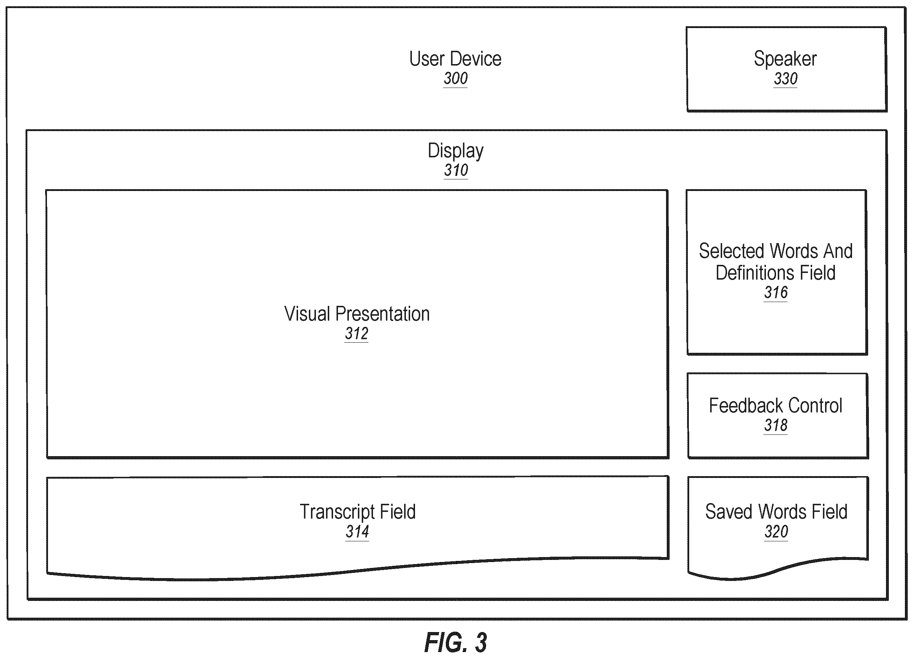

FIG. 3 illustrates an example user device 300 for user interface presentation. The user device 300 may be any computer system capable of participating in communication sessions. For example, the user device 300 may be a desktop computer, a laptop computer, a smartphone, a mobile phone, a tablet computer, or any other computing device that may be used for communication between devices over a network. The user device 300 may be similar to the user device 120 or the user device 250 as described in FIGS. 1 and 2, respectively.

The user device 300 may include a speaker 330. The speaker 330 may be any audio components and/or system capable of outputting audio. In some embodiments, the speaker 330 may output audio that is generated during a communication session. For example, the speaker 330 may output audio generated during a communication session between the device 300 and another device.

The user device 300 may include a display 310 on which a user interface may be presented. In these and other embodiments, the display may include a visual presentation 312, a transcript field 314, a display area 316 for selected words and definitions, a feedback control 318, and saved words field 320.

The visual presentation 312 may include a video depiction of the communication session. For example, the visual presentation 312 may present video feeds from other devices participating in a communication session with the user device 300.

The transcript may be presented on the display 310 in the transcript field 314 and may include written text based on transcript data obtained by the user device 300. In some embodiments, the user device 300 may obtain transcript data generated from audio data by speech via automated speech recognition technology and present the transcript data. The transcript data may be presented in real-time during the communication session.

The selected words and the definitions may be presented on the display 310 by the user device 300 in a display area 316. In some embodiments, the selected words may be obtained from a large language model after the large language model has analyzed the transcript data to select the words from the transcript data. In addition, the large language model may generate the definition of the selected words and the definitions may be obtained by the user device 300 for presentation on the display 310.

Presenting the selected words and definitions on the display 310 of the user device 300 may improve the user interface of the display 310 because, the display presents the transcript of the communication session in the transcript field 314, and also presents selected words from the transcript and provides the definitions. Thus, the user of the user device 300 may not have to exit the display 310 and search for the selected words and the definitions.

The feedback control 318 may allow the user device 300 to obtain feedback data based on feedback from the user of the user device 300 about the selected words and the definitions. In some embodiments, the feedback data may be negative data and/or positive feedback data based on negative and/or positive feedback provided by the user of the user device 300. In these and other embodiments, the feedback control 318 may include a simplistic user-interaction mechanism like one or more single-click buttons, touchscreen-tap, and/or a touchscreen-swipe to allow the user of the user device 300 to provide the user device 300 with negative and/or positive feedback about the selected words and the definitions.

For example, the user of the user device 300 may provide negative feedback regarding the selected words and the definitions, which may create negative feedback data. In some embodiments, the user device 300 may remove the selected words and the definitions from the display 310 based on the negative feedback data.

In another example, the user of the user device 300 may provide positive feedback regarding the selected words and the definitions, which may create positive feedback data. In some embodiments, the user device 300 may save the selected words and the definitions based on the positive feedback data in the saved words field 320 of the display 310.

In some embodiments, the user device 300 may save the selected words and the definitions in the saved words field 320 of the display 310 without obtaining positive feedback data. In these and other embodiments, the user of the user device 300 may recall the selected words and the definitions for re-presentation on the display 310.

Modifications, additions, or omissions may be made to user device 300 without departing from the scope of the present disclosure. For example, in some embodiments the user device 300 may not include the visual presentation 312. Alternately or additionally, the user device 300 may not present the transcript field 314, the feedback control 318, and/or the saved words field 320.

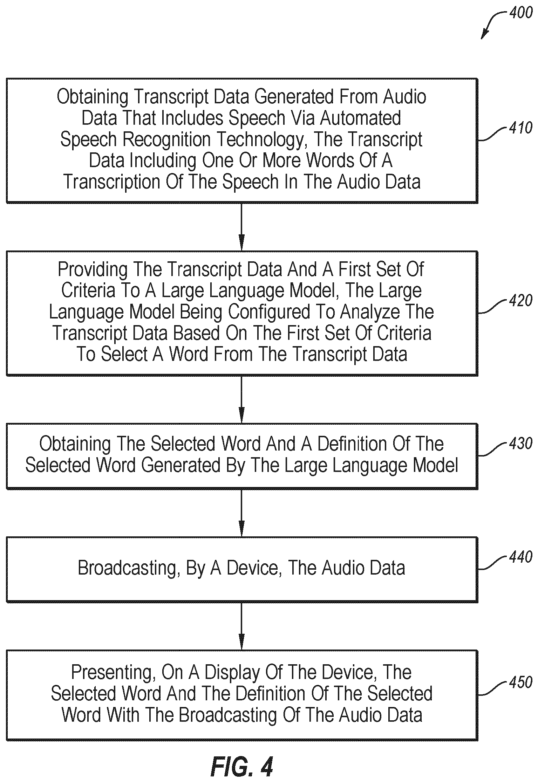

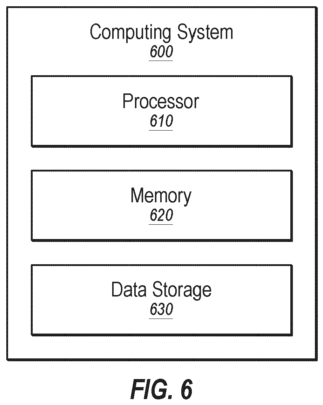

FIG. 4 illustrates a flowchart of an example method 400 of user interface presentation, in accordance with one or more embodiments of the present disclosure. The method 400 may be performed by any suitable system, apparatus, or device. For example, the method 400 may be implemented using the environment 100 of FIG. 1 or the computing system 600 of FIG. 6. Although illustrated with discrete blocks, the steps and operations associated with one or more blocks of the method 400 may be divided into additional blocks, combined into fewer blocks, or eliminated, depending on the particular implementation. For example, one or more of the operations described above with respect to the operational workflow 200 of FIG. 2 may be performed as part of the method 400.

The method 400 of user interface presentation may include blocks 410, 420, 430, 440, and 450. At block 410, transcript data generated from audio data that includes speech via automated speech recognition technology may be obtained. The transcript data may include one or more words of a transcription of the speech in the audio data. The automated speech recognition technology may be similar to the automated speech recognition system 140 and 210 described with respect to FIGS. 1 and 2, respectively. The transcript data may be obtained by a device similar to user device 120, 250, and 300 described with respect to FIGS. 1, 2, and 3 respectively. The transcript data may also be obtained by a device, or a system separate from the device.

At block 420, the transcript data and a first set of criteria may be provided to a large language model. In these and other embodiments, the large language model may be configured to analyze the transcript data based on the first set of criteria to select a word from the transcript data. In some embodiments, the first set of criteria may be provided to the large language model via one or more prompts. In these and other embodiments, the first set of criteria may direct the large language model to select one or more words from the transcript data that are technical, acronyms, jargon, or other words that a typical individual may not understand.

The first set of criteria may be similar to the first set of criteria described previously like the first set of criteria 220 described with respect to FIG. 2. The large language model may be similar to the large language model 150 and 225 described with respect to FIGS. 1 and 2, respectively. The transcript data may be provided by a device similar to that of user device 120, 250, and 300 described with respect to FIGS. 1, 2, and 3 respectively or some other device or system.

At block 430, the selected word and a definition of the selected word generated by the large language model may be obtained. In some embodiments, the selected word and the definition of the selected word may be obtained by a device similar to that of user device 120, 250, and 300 described with respect to FIGS. 1, 2, and 3 respectively or some other device or system.

At block 440, the audio data may be broadcasted by a device. The audio data may be generated during a communication session between the device and another device. In some embodiments, the method may further include obtaining the audio data at the device before broadcasting the audio data. The device may be similar to user device 120, 250, and 300 described with respect to FIGS. 1, 2, and 3 respectively. The other device may be similar to device 130 described with respect to FIG. 1.

At block 450, the selected word and the definition of the selected word with the broadcasted audio data may be presented on a display of the device. In some embodiments, the display may include a user interface and the selected word and the definition of the selected word may be presented on the user interface while the audio data is being broadcasted. In these and other embodiments, the user of the user interface may see the selected word and the definition of the selected word while listening to the audio without navigating away from the user interface. In some embodiments, the selected word and the definition of the selected word may be presented in real-time during the communication session and in association with broadcasting a portion of the audio data that includes the selected word.

Modifications, additions, or omissions may be made to the method 400 without departing from the scope of the disclosure. For example, the designations of different elements in the manner described is meant to help explain concepts described herein and is not limiting. Further, the method 400 may include any number of other elements or may be implemented within other systems or contexts than those described.

For example, the method 400 may further include providing a second set of criteria to the large language model, the large language model being configured to output the definition of the selected word based on the second set of criteria. The second set of criteria may be similar to the second set of criteria described previously like the second set of criteria 240 of FIG. 2.

In another example, the method 400 may further include obtaining, at the device, an indication to present the selected word and the definition of the selected word on the display, and the selected word and the definition of the selected word may be presented in response to obtaining the indication to present the selected word and the definition of the selected word on the display. In these and other embodiments, the method 400 may further include providing, by the device, a third set of criteria to the large language model, the large language model being configured to determine whether to present the selected word and the definition of the selected word on the display based on the third set of criteria and to provide the indication to the device. An example of the third set of criteria includes an attribute of a user of the device. Examples of attributes of a user of the device includes a technical field in which the user is employed, a business organization associated with the user, an education level of the user, a job role of the user, and a number of years of working experience of the user. The third set of criteria may be similar to the third set of criteria described previously like the third set of criteria 242 of FIG. 2.

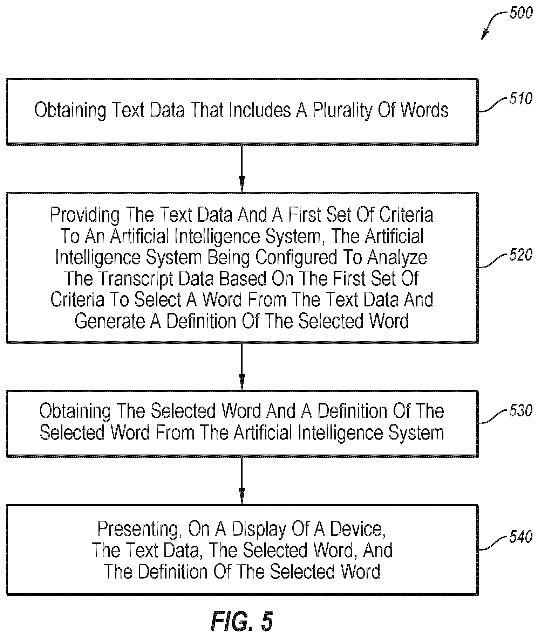

FIG. 5 illustrates a flowchart of an example method 500 of improving a user interface, in accordance with one or more embodiments of the present disclosure. The method 500 may be performed by any suitable system, apparatus, or device. For example, the method 500 may be implemented using the environment 100 of FIG. 1 or the computing system 600 of FIG. 6. Although illustrated with discrete blocks, the steps and operations associated with one or more blocks of the method 500 may be divided into additional blocks, combined into fewer blocks, or eliminated, depending on the particular implementation. For example, one or more of the operations described above with respect to the operational workflow 200 of FIG. 2 may be performed as part of the method 500.

At block 510, text data that includes multiple words may be obtained. The text data may be data obtained from written text, images, videos, or audio or the text data may be similar to that of the transcript data obtained at block 410 of method 400. For example, the text data may be generated from a communication session between a device and another device.

At block 520, the text data and a first set of criteria may be provided to an artificial intelligence system. In these and other embodiments, the artificial intelligence system may be configured to analyze the transcript data based on the first set of criteria to select a word from the text data and generate a definition of the selected word. In some embodiments, the artificial intelligence system may be similar to the large language model 150 and 225 of FIGS. 1 and 2, respectively. The first set of criteria may be similar to the first set of criteria described previously like the first set of criteria 220 of FIG. 2.

At block 530, the selected word and a definition of the selected word may be obtained from the artificial intelligence system. In some embodiments, a second set of criteria may be provided to the artificial intelligence system, the artificial intelligence system being configured to output the definition of the selected word based on the second set of criteria. The second set of criteria may be similar to the second set of criteria described previously like the second set of criteria 240 described with respect to FIG. 2.

At block 540, the text data, the selected word, and the definition of the selected word may be presented on a display of a device. The device may be similar to user device 120, 250, and 300 described with respect to FIGS. 1, 2, and 3, respectively. In some embodiments, the display may also be configured to present a user interface. In these and other embodiments, the user of the user interface may see the selected word and the definition of the selected word in the user interface while listening to the audio without navigating away from the user interface.

In some embodiments, an indication to present the selected word and the definition of the selected word in the user interface on the display may be obtained, and the selected word and the definition of the selected word may be presented in response to obtaining the indication to present the selected word and the definition of the selected word in the user interface on the display.

In these and other embodiments, a third set of criteria may be provided to the artificial intelligence system, the artificial intelligence system being configured to determine whether to present the selected word and the definition of the selected word in the user interface on the display based on the third set of criteria and to provide an indication to the device regarding which selected words to display. The third set of criteria may be similar to the third set of criteria described previously like the third set of criteria 342 described with respect to FIG. 2.

Modifications, additions, or omissions may be made to the method 500 without departing from the scope of the disclosure. For example, the designations of different elements in the manner described is meant to help explain concepts described herein and is not limiting. Further, the method 500 may include any number of other elements or may be implemented within other systems or contexts than those described.

FIG. 6 illustrates a block diagram of an example computing system 600, according to at least one embodiment of the present disclosure. The computing system 600 may be configured to implement or direct one or more suitable operations described in the present disclosure. For example, the computing system 600 may be part of one or more of the elements of FIG. 1, and/or be configured to perform one or more of the processes of FIG. 2, the method of FIG. 4, or the method of FIG. 5. The computing system 600 may include a processor 610, a memory 620, and a data storage 630. The processor 610, the memory 620, and the data storage 630 may be communicatively coupled.

In general, the processor 610 may include any suitable special-purpose or general-purpose computer, computing entity, or processing device including various computer hardware or software modules and may be configured to execute instructions stored on any applicable computer-readable storage media. For example, the processor 610 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 6, the processor 610 may include any number of processors configured to, individually or collectively, perform or direct performance of any number of operations described in the present disclosure. Additionally, one or more of the processors may be present on one or more different electronic devices, such as different servers.

In some embodiments, the processor 610 may be configured to interpret and/or execute program instructions and/or process data stored in the memory 620, the data storage 630, or the memory 620 and the data storage 630. In some embodiments, the processor 610 may fetch program instructions from the data storage 630 and load the program instructions in the memory 620. After the program instructions are loaded into memory 620, the processor 610 may execute the program instructions.

The memory 620 and the data storage 630 may include computer-readable storage media for carrying or having computer-executable instructions or data structures stored thereon. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other non-transitory storage medium which may be used to carry or store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision of In re Nuijten, 500 F.3d 1346 (Fed. Cir. 2007).

Combinations of the above may also be included within the scope of computer-readable storage media. Computer-executable instructions may include, for example, instructions and data configured to cause the processor 610 to perform a certain operation or group of operations.

Modifications, additions, or omissions may be made to the computing system 600 without departing from the scope of the present disclosure. For example, in some embodiments, the computing system 600 may include any number of other components that may not be explicitly illustrated or described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and methods described herein are generally described as being implemented in software (stored on and/or executed by general purpose hardware), specific hardware implementations or a combination of software and specific hardware implementations are also possible and contemplated.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, it is understood that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art and are to be construed as being without limitation to such specifically recited examples and conditions. Although embodiments of the present disclosure have been described in detail, it should be understood that the various changes, substitutions, and alterations could be made hereto without departing from the spirit and scope of the present disclosure.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

The disclosure extends to the following set of numbered statements:
S1. A method comprising:
   obtaining transcript data generated from audio data that includes speech via automated speech recognition technology, the transcript data including one or more words of a transcription of the speech in the audio data;
   providing the transcript data and a first set of criteria to a large language model, the large language model being configured to analyze the transcript data based on the first set of criteria to select a word from the transcript data;
   obtaining the selected word and a definition of the selected word generated by the large language model;
   broadcasting, by a device, the audio data; and
   presenting, on a display of the device, the selected word and the definition of the selected word with the broadcasting of the audio data.
S2. The method of statement S1, further comprising obtaining, at the device, an indication to present the selected word and the definition of the selected word on the display, wherein the selected word and the definition of the selected word are presented in response to obtaining the indication to present the selected word and the definition of the selected word on the display.
S3. The method of statement S2, further comprising providing, by the device, a second set of criteria to the large language model, the large language model being configured to determine whether to present the selected word and the definition of the selected word on the display based on the second set of criteria and to provide the indication to the device.
S4. The method of statement S3, wherein the second set of criteria includes an attribute of a user of the device.
S5. The method of statement S4, wherein the attribute of the user includes one or more of the following: a technical field in which the user is employed, business organization associated with the user, education level of the user, job role of the user, and years of working experience of the user.
S6. The method of statement S5, further comprising:
   obtaining user feedback regarding the presented selected word and the definition; and
   updating the second set of criteria based on the user feedback, wherein the updated second set of criteria is provided to the large language model in a future communication session.
S7. The method of statement S1, further comprising providing a second set of criteria to the large language model, the large language model being configured to output the definition of the selected word based on the second set of criteria.
S8. The method of statement S1, wherein the audio data is generated during a communication session between the device and another device, the method further comprising obtaining, at the device, the audio data before broadcasting the audio data.
S9. The method of statement S7, wherein the selected word and the definition of the selected word are presented in real-time during the communication session in association with broadcasting of a portion of the audio data that includes the selected word.
S10. One or more non-transitory computer-readable mediums configured to store instructions that when executed perform the method of statement S1.
S11. A device comprising:
   one or more non-transitory computer-readable media configured to store instructions; and
   a processor coupled to the computer-readable media and configured to execute the instructions to perform operations, the operations comprising:
      obtaining transcript data generated from audio data that includes speech via automated speech recognition technology, the transcript data including one or more words of a transcription of the speech in the audio data;
      providing the transcript data and a first set of criteria to a large language model, the large language model being configured to analyze the transcript data based on the first set of criteria to select a word from the transcript data;
      obtaining the selected word and a definition of the selected word generated by the large language model;
      broadcasting, by a device, the audio data; and
      presenting, on a display of the device, the selected word and the definition of the selected word with the broadcasting of the audio data.
S12. The device of statement S11, wherein the operations further include obtaining an indication to present the selected word and the definition of the selected word on the display, wherein the selected word and the definition of the selected word are presented in response to obtaining the indication to present the selected word and the definition of the selected word on the display.
S13. The device of statement S12, wherein the operations further include providing a second set of criteria to the large language model, the large language model being configured to determine whether to present the selected word and the definition of the selected word on the display based on the second set of criteria and to provide the indication to the device.
S14. The device of statement S13, wherein the second set of criteria includes an attribute of a user of the device.
S15. The device of statement S14, wherein the attribute of the user includes one or more of the following: a technical field in which the user is employed, business organization associated with the user, education level of the user, job role of the user, and years of working experience of the user.
S16. The device of statement S11, wherein the operations further include providing a second set of criteria to the large language model, the large language model being configured to output the definition of the selected word based on the second set of criteria.
S17. The device of statement S11, wherein the audio data is generated during a communication session between the device and another device, the operations further comprising obtaining the audio data before broadcasting the audio data.
S18. The device of statement S17, wherein the selected word and the definition of the selected word are presented in real-time during the communication session in association with broadcasting of a portion of the audio data that includes the selected word.
S19. The device of statement S17, wherein the communication session is a video conference that includes a plurality of devices, wherein the selected word presented by the device is different than a first word and the definition of the first word presented by another device participating in the video conference.
S20. A method comprising:
   obtaining text data that includes a plurality of words
   providing the text data and a first set of criteria to an artificial intelligence system, the artificial intelligence system being configured to analyze the transcript data based on the first set of criteria to select a word from the text data and generate a definition of the selected word;
   obtaining the selected word and a definition of the selected word from the artificial intelligence system; and
   presenting, on a display of a device, the text data, the selected word, and the definition of the selected word.

## Claims

1. A method comprising:
obtaining transcript data generated from audio data that includes speech via automated speech recognition technology, the transcript data including one or more words of a transcription of the speech in the audio data;
providing the transcript data and a first set of criteria to a large language model, the large language model being configured to analyze the transcript data based on the first set of criteria to select a word from the transcript data;
obtaining the selected word and a definition of the selected word generated by the large language model;
broadcasting, by a device, the audio data; and
presenting, on a display of the device, the selected word and the definition of the selected word with the broadcasting of the audio data.

2. The method of claim 1, further comprising obtaining, at the device, an indication to present the selected word and the definition of the selected word on the display, wherein the selected word and the definition of the selected word are presented in response to obtaining the indication to present the selected word and the definition of the selected word on the display.

3. The method of claim 2, further comprising providing, by the device, a second set of criteria to the large language model, the large language model being configured to determine whether to present the selected word and the definition of the selected word on the display based on the second set of criteria and to provide the indication to the device.

4. The method of claim 3, wherein the second set of criteria includes an attribute of a user of the device.

5. The method of claim 4, wherein the attribute of the user includes one or more of the following: a technical field in which the user is employed, business organization associated with the user, education level of the user, job role of the user, and years of working experience of the user.

6. The method of any of claims 3 to 5, further comprising:
obtaining user feedback regarding the presented selected word and the definition; and
updating the second set of criteria based on the user feedback, wherein the updated second set of criteria is provided to the large language model in a future communication session.

7. The method of claim 1 or 2, further comprising providing a second set of criteria to the large language model, the large language model being configured to output the definition of the selected word based on the second set of criteria.

8. The method of any of the preceding claims, wherein the audio data is generated during a communication session between the device and another device, the method further comprising obtaining, at the device, the audio data before broadcasting the audio data.

9. The method of claim 7 or 8, wherein the selected word and the definition of the selected word are presented in real-time during the communication session in association with broadcasting of a portion of the audio data that includes the selected word.

10. The method of claim 8 or 9, wherein the communication session is a video conference that includes a plurality of devices, wherein the selected word presented by the device is different than a first word and the definition of the first word presented by another device participating in the video conference.

11. A method comprising:
obtaining text data that includes a plurality of words
providing the text data and a first set of criteria to an artificial intelligence system, the artificial intelligence system being configured to analyze the transcript data based on the first set of criteria to select a word from the text data and generate a definition of the selected word;
obtaining the selected word and a definition of the selected word from the artificial intelligence system; and
presenting, on a display of a device, the text data, the selected word, and the definition of the selected word.

12. One or more non-transitory computer-readable mediums configured to store instructions that when executed perform the method of any of the preceding claims.

13. A device comprising:
one or more non-transitory computer-readable media configured to store instructions; and
a processor coupled to the computer-readable media and configured to execute the instructions to perform the method of any of claims 1 to 11.
